# EUROPEAN PATENT SPECIFICATION

(11) **EP 3 199 683 B1**
(45) Date of publication and mention of the grant of the patent: **21.04.2021**
(21) Application number: 15844544.5
(22) Date of filing: 25.09.2015
(51) Int. Cl.: B32B 5/26, B32B 27/30, D04H 3/007, D01D 5/08

(54) **NONWOVEN FABRIC FORMED FROM POLYVINYL BUTYRAL CONTINUOUS FIBERS, AND MANUFACTURING METHOD THEREFOR**
VLIESSTOFF AUS POLYVINYLBUTYRALENDLOSFASERN UND HERSTELLUNGSVERFAHREN DAFÜR
TISSU NON-TISSÉ FORMÉ DE FIBRES CONTINUES DE POLYBUTYRAL DE VINYLE ET SON PROCÉDÉ DE FABRICATION

(30) Priority: 26.09.2014 JP 2014196140
(43) Date of publication of application: 02.08.2017
(73) Proprietor: Kuraray Co., Ltd., Okayama 710-0801 (JP)
(72) Inventor: SASAKI, Masahiro, Saijo-shi Ehime 793-8585 (JP); SHIROTANI, Yasuhiro, Saijo-shi Ehime 793-8585 (JP)
(74) Representative: Vossius & Partner Patentanwälte Rechtsanwälte mbB
(86) International application number: PCT/JP2015/077090
(87) International publication number: WO 2016/047752

(56) References cited:
- WO-A1-2006/101175
- WO-A1-2008/050517
- WO-A1-2008/123150
- WO-A1-2014/157080
- JP-A- H08 143 343
- JP-A- H08 260 235
- JP-A- S60 223 806
- JP-A- 2002 356 511
- JP-A- 2008 214 435
- JP-A- 2008 214 435
- JP-A- 2009 013 558
- US-A1- 2009 068 914
- US-A1- 2010 104 866

## Description

### TECHNICAL FIELD

The present invention relates to a nonwoven fabric made of continuous fibers of polyvinyl butyral (hereinafter, sometimes referred to as "PVB") and a manufacturing method therefor.

### BACKGROUND ART

A polyvinyl butyral exhibits excellent adhesiveness and compatibility to various materials and solubility in an organic solvent, and thus has been widely used as a binder for ceramics, an adhesive, an ink, a paint, an interlayer for a laminated glass and the like. Recently, it has been suggested that it is used as a nonwoven fabric; for example, Patent Reference No. 1 has described a nonwoven fabric made of PVB fibers and described that it is used as an adhesion layer to provide a multilayer structure having excellent mechanical properties and sound absorbability. A nonwoven fabric made of PVB fibers, however, embraces a problem that it generates odor during handling thereof.

Patent Reference No. 2 has described a method for suppressing generation of odor from PVB pellets. Specifically, there has been described a method for manufacturing a PVB resin pellet, comprising melting a PVB resin powder with a moisture content of 0.01 to 6 % by weight using a melt extruder having a vent unit for devolatilizing equipped with at least one vacuuming means; and extruding the molten PVB resin from the melt extruder followed by cutting. There has been described that the method provides a PVB resin pellet without generating odor during manufacturing and handling. In the resin pellet, the total content of butyl aldehyde (1-butanal) and 2-ethyl-2-hexenal is 100 ppm by weight or less. Furthermore, an acid value of the resin pellet is 0.7 mgKOH/g or less. Patent Reference No. 2 has described in Example 1 that a PVB pellet was produced using melt extruder having two vent units. The reference has described that a PVB pellet with a 1-butanal content of 16 ppm by weight and an acid value of 0.20 mgKOH/g is produced by melt-kneading at a pressure of 0.02 MPa (vacuum degree: 0.08 MPa) in the vent unit in the side of a hopper, a pressure of 0.01 MPa (vacuum degree: 0.09 MPa) in the vent unit in the side of a nozzle and a resin temperature of 200 °C. Patent Reference No. 2 has evaluated solubility of the obtained PVB resin pellet in an organic solvent and so on, but not described melt-molding of the PVB resin pellet or odor after melt-molding.

### PRIOR ART REFERENCES

### Patent References

Patent Reference No. 1: WO 2006/101175 A1
Patent Reference No. 2: WO 2008/123150 A

US 2009/068914 A1 and US 2010/104866 A1 are also examples of prior art.

### SUMMARY OF THE INVENTION

### PROBLEMS TO BE SOLVED BY THE INVENTION

To solve the above problems, an objective of the present invention is to provide a nonwoven fabric made of PVB continuous fibers with distinct odor being suppressed and a manufacturing method therefor according to claims 1 to 3.

### MEANS FOR SOLVING THE PROBLEMS

The above problems can be solved by providing a meltblown or spunbonded nonwoven fabric made of continuous fibers of polyvinyl butyral having a butyralization degree of 50 to 90 mass%, wherein a content of 1-butanal is 10 mass ppm or less. A preferable embodiment is a laminate wherein an inorganic fiber layer is adhered to another layer via an adhesion layer made of the above nonwoven fabric.

The above problems can be also solved by a method for manufacturing the above meltblown or spunbonded nonwoven fabric made of continuous fibers of polyvinyl butyral having a butyralization degree of 50 to 90 mass %, wherein a content of 1-butanal in the fabric is 10 mass ppm or less, the method comprising charging a polyvinyl butyral powder with a moisture content of 5 mass% or less in an extruder; forming polyvinyl butyral pellets having a butyralization degree of 50 to 90 mass%, an MFR of 0.5 to 45 g/10 min at 150 °C and 2.16 kgf, an acid value of 0.12 mgKOH/g or less, and a 1-butanal content of 5 mass ppm or less, by melt-kneading the powder at a temperature of 220 °C or lower while devolatilizing at a reduced pressure of 0.005 MPa or less by means of at least one vent, melt-spinning the pellets to produce continuous fibers at a temperature of 220 °C or lower, and forming a web by integrating the continuous fibers.

### EFFECTS OF THE INVENTION

In a nonwoven fabric made of PVB continuous fibers of the present invention, distinct odor is suppressed. Furthermore, this PVB nonwoven fabric can be used as an adhesive layer for firmly bonding an inorganic fiber layer to another layer. Furthermore, according to a manufacturing method of the present invention, such a nonwoven fabric can be produced.

### MODES FOR CARRYING OUT THE INVENTION

There will be detailed the present invention. A polyvinyl butyral used in the present invention is represented by chemical formula (I) shown below.

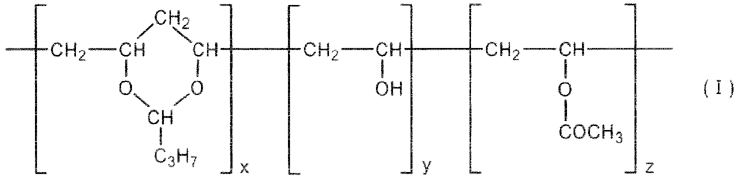

In the PVB used in the present invention, a butyralization degree is expressed by the content of a repeating unit X in the polymer composition represented by the chemical formula (I). Specifically, in the present invention, it is preferable to use a PVB having a degree of butyralization of from 50 to 90 mass%, more preferably from 55 to 85 mass%. If a butyralization degree is less than 50 mass%, the PVB comes to have an increased a glass transition temperature and resin fluidity is reduced, leading to insufficient thermal adhesiveness when a PVB nonwoven fabric is used as an adhesion layer. If a butyralization degree is greater than 90 mass%, resin strength at the adhesion interface is insufficient when a PVB nonwoven fabric is used as an adhesion layer. Here, a butyralization degree is substantially unchanged for a starting PVB pellet and a nonwoven fabric produced by melt-spinning.

A PVB resin used in the present invention can be produced by any known manufacturing method without any particular limitation. For example, a polyvinyl acetate prepared by polymerizing vinyl acetate monomer can be saponified to give a polyvinyl alcohol, which can be then butyralized to give a PVB resin. There will be described a representative method for manufacturing a PVB resin.

A polyvinyl alcohol is produced by saponifying a polyvinyl acetate prepared by polymerizing vinyl acetate monomers. Vinyl acetate monomers can be polymerized by a known method such as solution polymerization, bulk polymerization, suspension polymerization and emulsion polymerization. Here, a polymerization initiator can be appropriately selected from azo catalysts, peroxide catalysts and redox catalysts, depending on a polymerization method.

When vinyl acetate monomers are polymerized, other vinyl ester monomer(s) can be copolymerized without departing from the scope of the invention. Examples of such a vinyl ester monomer include vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate and vinyl benzoate.

The saponification can be conducted by a known method such as alcoholysis using an alkali or acid catalyst and hydrolysis. Among others, a method employing methanol as a solvent and sodium hydroxide (NaOH) as a catalyst is preferable because of its convenience. A polyvinyl alcohol produced by saponifying a polyvinyl acetate prepared by polymerizing vinyl acetate monomer contains vinyl alcohol units and vinyl acetate units.

A polyvinyl alcohol can be butyralized by a well-known method; for example, a polyvinyl alcohol can be mixed with 1-butanal in the presence of an acid catalyst. There are no particular restrictions to an acid catalyst which can be an organic or inorganic acid, including acetic acid, para-toluenesulfonic acid, nitric acid, sulfuric acid and hydrochloric acid. Among these, a method using hydrochloric acid, sulfuric acid or nitric acid is generally used, and particularly, hydrochloric acid can be preferably used.

Specifically, a PVB resin can be produced by the following representative method. First, an aqueous solution of polyvinyl alcohol (concentration: 3 to 15 mass%) at 80 to 100 °C is prepared, and the aqueous solution is gradually cooled to -10 to 30 °C over 10 to 60 min. Then, to the aqueous solution is added 1-butanal and an acid catalyst, and the butyralization reaction is allowed to proceed for 30 to 300 min, maintaining the temperature at -10 to 30 °C, and then the reaction liquid is allowed to warm to 30 to 80 °C over 30 to 200 min. Then the reaction liquid is kept within the temperature range for 1 to 8 hours. Subsequently, the reaction liquid can be neutralized with an alkali, washed with water and then dried to give a PVB powder.

A PVB powder is usually dissolved in a solvent and used in a binder for ceramics, an adhesive, an ink, a paint or the like. Alternatively, a plasticizer can be added to a PVB powder followed by kneading the mixture, to give an interlayer for a laminated glass. However, depending on an application, it is difficult to handle the PVB in powder form. For example, it is difficult to handle a powder as such for smoothly supplying a PVB to a molding machine in melt molding. In such a case, it is, therefore, preferable to produce a PVB pellet. When melt-spinning is conducted as in the present invention, it is useful to handle the PVB as a pellet.

A moisture content of the PVB powder used for producing a PVB pellet is preferably 5 mass% or less. With a moisture content of 5 mass% or less, interference of devolatilization of 1-butanal due to devolatilization of excessive water can be avoided, so that a 1-butanal content in a PVB pellet produced can be reduced. If the moisture content is too small, the powder may be so scatterable that dust explosion may occur. The moisture content is, therefore, preferably 0.1 mass% or more. A moisture content of the PVB powder can be adjusted to the above range, for example, by adjusting the drying conditions after neutralization and washing with water.

The PVB powder thus produced is charged in an extruder and then melt-kneaded to form a pellet. Here, it is preferable to form a pellet by melt-kneading while vacuuming using at least one vent for devolatilization, and thus a 1-butanal content of the PVB pellet can be reduced and an acid value can be reduced. The extruder can be a single-screw extruder or a double-screw extruder, preferably an extruder having a plurality of vents. A resin temperature during melt-kneading is preferably a melting temperature of the PVB or higher and 220 °C or lower. Melt-kneading at a relatively lower temperature of 220 °C or lower allows an acid value of the PVB pellet and a 1-butanal content to be reduced.

A pressure is preferably reduced to 0.005 MPa or less by a vent. Here, the pressure of 0.005 MPa or less is an absolute inner pressure of the vent. Since a normal pressure is 0.1 MPa, it is 0.095 MPa or higher as expressed by a vacuum degree (gauge pressure). As described above, by melt-kneading at a very low pressure (high vacuum degree) and a relatively lower temperature, an acid value of a PVB pellet produced can be reduced and a 1-butanal content can be reduced.

After melt-kneading by an extruder as described above, extrusion and then cutting can provide a PVB pellet. A preferable extruding method is extruding a molten resin as a strand. A preferable cutting method is cutting by means of a cutter such as a rotary cutter.

An acid value of a PVB pellet used in the present invention thus obtained is preferably 0.12 mgKOH/g or less. If the acid value is more than 0.12 mgKOH/g, decomposition of a PVB during melt-spinning proceeds and a 1-butanal content of the PVB nonwoven fabric is increased, leading to generation of bad odor. When continuous fibers are produced by melt-spinning, a molten resin must pass through a narrow nozzle at a high speed. It is, therefore, common to conduct spinning at a higher temperature than usual melt molding for reducing a melt viscosity. In such a case, if a PVB pellet with a high acid value is used, the PVB tends to be degraded also due to a high shear force during spinning. An acid value of the PVB pellet is more preferably 0.1 mgKOH/g or less.

A 1-butanal content of a PVB pellet is preferably 5 mass ppm or less. If the 1-butanal content is more than 5 mass ppm, a 1-butanal content of a PVB fiber produced may be increased, leading to bad odor.

A melt flow rate (MFR) of a PVB pellet used in the present invention is preferably 0.5 to 45 g/10 min. If the MFR is less than 0.5 g/10 min, its fluidity is too low to form a fiber. If the MFR is more than 45 g/10 min, fluidity is high, but a fiber produced is insufficiently strong for use. The MFR is more preferably 1 to 40 g/10 min. Herein, an MFR is measured in accordance with JIS K7210 test method and expressed as a discharged amount of a molten polymer at 150 °C from a capillary at a load of 2.16 kgf for 10 min.

A PVB nonwoven fabric of the present invention is produced using a PVB pellet thus produced. Specifically, preferred is a method comprising forming a web by integrating continuous fibers produced by melt-spinning, at a temperature of 220 °C or lower, polyvinyl butyral pellets having a butyralization degree of 50 to 90 mass%, an MFR of 0.5 to 45 g/10 min at 150 °C and 2.16 kgf, an acid value of 0.12 mgKOH/g or less, and a 1-butanal content of 5 mass ppm or less. If the spinning temperature is higher than 220 °C, a PVB is significantly thermally decomposed, accelerating generation of 1-butanal which is responsible for bad odor. Since a molten resin must pass through a narrow nozzle at a high speed in the melt-spinning, it is common that spinning is conducted at a higher temperature than usual melt molding for reducing a melt viscosity. Thus, it is important to intentionally set the temperature lower. A too high temperature not only accelerate generation of 1-butanal, but also causes generation of a thermally-deteriorated resin (polymer lump) in a spinning nozzle, resulting in nozzle fouling and/or thread breakage.

A PVB nonwoven fabric of the present invention is a nonwoven fabric made of continuous fibers. A nonwoven fabric made of continuous fibers does not have to be mutually interlaced as in a short-fiber nonwoven fabric. Therefore, there are less restrictions to strength of a single fiber used in, for example, a carding process, and it is easy to stably produce a nonwoven fabric for a wide spectrum of specifications. Furthermore, a nonwoven fabric with less fluffing can be produced. A nonwoven fabric made of continuous fibers of the present invention has the form of a spunbonded nonwoven fabric or a meltblown nonwoven fabric. Among others, particularly preferred is a meltblown nonwoven fabric which can be made fine and can be directly processed into a nonwoven fabric after melt extrusion.

For producing a nonwoven fabric made of continuous fibers, it is preferable that PVB pellets supplied for spinning are preliminarily dried to a moisture content of 5000 mass ppm or less. When the moisture content is more than 5000 mass ppm, spinning becomes difficult.

There will be specifically described manufacturing a meltblown nonwoven fabric. By way of an example of manufacturing by a melt-blowing method, a spinning machine can be a well-known melt-blowing machine, and the preferable spinning conditions are a pore size of a spinning nozzle of 0.2 to 0.5 mm, a single-pore discharge rate of 0.1 to 1.0 g/min, an air amount per 1 m of nozzle length of 5 to 20 Nm³/min, a spinning temperature of 170 °C or higher and 220 °C or lower, and a hot-air temperature (primary air temperature) of 180 °C or higher and 230 °C or lower. If the spinning temperature is lower than 170 °C, a polymer viscosity is too high to be processed into fibers and it becomes difficult to produce fine fibers with hot air. If the temperature is higher than 220 °C, the polymer is significantly thermally decomposed, accelerating generation of 1-butanal which is responsible for bad odor.

A basis weight of the meltblown nonwoven fabric obtained is preferably 1 to 100 g/m². If the basis weight is less than 1 g/m², even when the nonwoven fabric is thermally melted and adhered to a material such as a glass fiber layer, it is adhered at few points, resulting in an insufficient adhesion strength. If it is more than 100 g/m², an adhesion force is also insufficient because of difficulty in heat transfer during thermal adhesion. More preferably, it is 5 to 50 g/m². Furthermore, although a fiber diameter can be appropriately controlled depending on an application, it is preferably 0.5 to 40 µm, further preferably 3 to 20 µm in the light of processibility, nonwoven fabric strength and adhesion performance.

There will be specifically described production of a spunbonded nonwoven fabric. By way of an example of production by a spunbonding method, a spinning apparatus can be a well-known spunbonding machine, and the preferable spinning conditions are a pore size of a spinning nozzle of 0.2 to 1 mm, a single-pore discharge rate of 0.1 to 2.0 g/min, a drawing air of 500 to 5000 m/min, a spinning temperature of 150 °C or higher and 220 °C or lower. If the spinning temperature is lower than 150 °C, a polymer viscosity is too high to make a fiber, and a nozzle pressure is so increased that discharging becomes difficult. The spinning temperature is more preferably 170°C or higher. If the temperature is higher than 220 °C, the polymer is significantly thermally decomposed, accelerating generation of 1-butanal which is responsible for bad odor.

A basis weight of the spunbonded nonwoven fabric obtained is preferably 5 to 200 g/m². If the basis weight is less than 5 g/m², a texture is so coarse that an adhesive force is insufficient. If it is more than 200 g/m², an adhesion force is also insufficient because of difficulty in heat transfer during thermal adhesion. It is more preferably 10 to 150 g/m², further preferably 20 to 100 g/m². Although a fiber diameter in the spunbonded nonwoven fabric can be appropriately controlled depending on an application, it is preferably 5 to 50 µm, further preferably 10 to 40 µm in the light of nonwoven fabric strength and adhesion performance.

In a PVB nonwoven fabric of the present invention thus produced, a 1-butanal content is 10 mass ppm or less. For producing such a PVB nonwoven fabric with a very small 1-butanal content, it is very important, as described above, to use special PVB pellets with a low acid value and a low 1-butanal content, which is melt-spun at a low temperature for suppressing generation of 1-butanal during the spinning process. Thus, such a PVB nonwoven fabric with odor generation being highly suppressed could be only by this process.

A PVB nonwoven fabric of the present invention is preferably used as an adhesive. Specifically, a preferable embodiment of the present invention is a laminate wherein an inorganic fiber layer is adhered to another layer via an adhesion layer made of a PVB nonwoven fabric. A PVB is suitable for bonding an inorganic fiber layer because it exhibits good adhesiveness to an inorganic material, particularly a glass. A PVB also exhibits good adhesiveness to an organic polymer compound, and therefore, another layer described above is particularly preferably a layer made of an organic polymer compound.

Examples of an inorganic fiber layer in the laminate include, but not limited to, those made of glass fibers, carbon fibers, metal fibers and rock wool, preferably a glass-fiber layer in the light of adhesiveness and versatility. Another layer in the above laminate is preferably, but not limited to, a layer made of an organic polymer compound. Examples of a layer made of an organic polymer compound include an organic fiber assembly, and organic polymer compound sheets except for the fiber assembly. Examples of an organic fiber assembly include a nonwoven fabric, a woven cloth and a knitted fabric made of an organic fiber. An organic polymer compound sheet can be, in addition to a simple resin sheet, a foam sheet or an artificial leather sheet.

For bonding these layers, a plurality of layers are laminated via a PVB nonwoven fabric and the laminate is heated to melt the PVB fibers, whereby the plurality of layers can be mutually bonded. Here, the laminate is preferably pressed while being heated.

There are no particular restrictions to an application of a laminate in which an inorganic fiber layer and an organic polymer compound layer are bonded via a PVB nonwoven fabric of the present invention, and one of preferable applications is an interior material for a vehicle. An interior material for a vehicle must meet various requirements such as lightness, rigidity, cushioning property, sound absorbability, damping, air permeability and heat resistance, and therefore, it is preferable to use above laminate.

### EXAMPLES

The present invention will be further specifically described with reference to Examples. Evaluation items in Examples are assessed in accordance with the following methods.

### (1) Acid value of a PVB pellet (mgKOH/g)

Measured in accordance with JIS K6728:1977.

### (2) 1-Butanal content (mass ppm) of a PVB pellet and a nonwoven fabric

Measured by means of a headspace gas chromatograph "GC-14B" from Shimadzu Corporation equipped with a column from GL Sciences Inc. ("TC-1": inner diameter: 0.25 mm, length: 30 m).

### (3) Melt-spinnabiiity

A continuous spinnable time in manufacturing a nonwoven fabric was evaluated. Specifically, a time from beginning of spinning to occurrence of nozzle fouling and/or thread breakage due to thermally-deteriorated resin lump (polymer lump) in a spinning nozzle was measured.

### (4) Basis weight of a nonwoven fabric and a laminate

A basis weight (g/m²) was measured in accordance with JIS P8124,

### (5) Thickness of a nonwoven fabric

A nonwoven fabric was allowed to stand under the standard atmosphere (temperature: 20 °C, relative humidity: 65 %) for 4 hours or more. Using a thickness tester "PEACOCK dial thickness gauge H" from OZAKI MFG Co., Ltd. (gauge head size: 10 mmϕ, 180 g/cm²), a thickness was measured at five points, and then an average was calculated as a thickness of the nonwoven fabric (mm).

### (6) Odor of a nonwoven fabric

Odor of a nonwoven fabric was evaluated by a sensory test in accordance with the following criteria.
A: odor was hardly sensed
B: slight odor was sensed
C: odor was sensed.

### (7) Thickness of a laminate

A laminate was allowed to stand under the standard atmosphere (temperature: 20 °C, relative humidity: 65 %) for 4 hours or more. Using a thickness tester "PEACOCK digital gauge PDN12" from OZAKI MFG Co., Ltd. (gauge head size: 16 mmϕ, 550 g/cm²), a thickness was measured at five points, and then an average was calculated as a thickness of the laminate (mm).

### (8) Adhesion strength of a laminate

Using a tester "5543" from Instron Corporation, an adhesive force (N/15mm) between an urethane foam layer and a glass fiber layer was measured. A laminate was cut into a piece with a width of 15 mm to prepare a sample. In one end of the sample, the urethane foam layer was slightly peeled from the glass fiber layer. The sample was pinched by the upper and the lower chucks and then subjected to tensile measurement at a test speed of 100 mm/min.

### Example 1

### [Production of a PVB powder]

In a 2 liter glass vessel equipped with a reflux condenser, a thermometer and an anchor type stirring blade were charged 1295 g of ion-exchanged water and 105 g of polyvinyl alcohol (polymerization degree: 300, saponification degree: 98 mol%) and the whole system was warmed to 95 °C for completely dissolving the PVA to prepare an aqueous PVA solution (concentration: 7.5 mass%). With continuous stirring at a rotating speed of 120 rpm, the aqueous PVA solution thus prepared was gradually cooled to 10 °C over 30 min. Then, to the aqueous solution were added 58 g of 1-butanal and 90 mL of 20 mass% hydrochloric acid as a butyralization catalyst (acid catalyst), to initiate PVA butyralization. At the end of butyralization for 150 min, the whole system was warmed to 50 °C over 60 min, then kept at 50 °C for 120 min and then cooled to room temperature. A resin precipitated by cooling was collected by filtration, rinsed with ion-exchanged water (a hundred-fold volume with relation to the resin). To the resin was added a 0.3 mass% solution of sodium hydroxide for neutralization, and the mixture was kept at 40 °C for 10 hours, again washed with additional 100-fold volume of ion-exchanged water, and after removing water, dried at 40 °C under a reduced pressure for 18 hours, to afford a polyvinyl butyral powder (moisture content: 1.0 mass%).

### [Production of a PVB pellet]

As a melt extruder, co-rotating twin-screw extruder (from Toshiba Machine Co., Ltd.) having two vent units with L/D of 54 was used. A PVB powder was charged in a hopper of the extruder, and was melt-extruded under the conditions: a screw rotation speed of 300 rpm, a resin rate of 120 kg/hour, and a resin temperature of 200 °C. Here, the vents were vacuumed from the hopper side to 0.005 MPa and 0.003 MPa, respectively. A molten resin strand discharged from a die hole was cooled in a water bath and cut by a pelletizer to afford a cylindrical PVB pellet (moisture content 0.2 mass%) with a diameter of 1.6 mm and a length of 1.6 mm.

### [Analysis of a PVB pellet]

For the PVB pellet obtained, a butyralization degree was 68 mol%, a content of a residual acetyl group (vinyl acetate unit) was 2 mol% and a content of a residual hydroxyl group (vinyl alcohol unit) was 30 mol%. Furthermore, a 1-butanal content was 3.5 mass ppm and an acid value was 0.09 mgKOH/g. The analysis results are shown in Table 1.

### [Production of a meltblown nonwoven fabric]

Using the PVB pellet obtained, a meltblown nonwoven fabric was produced. Using a spinning nozzle having 1000 nozzle pores with a diameter of 0.4 mm per 1 m width, a resin was extruded at a spinning temperature of 205 °C and a discharge rate per pore of 0.5 g/min, and drawn by hot-air blowing at 12 Nm³/min per 1 m nozzle width, to provide a meltblown nonwoven fabric with a fiber diameter of 5 µm, a basis weight of 46.4 g/m² and a thickness of 0.296 mm. A time from the beginning of spinning to mass generation was more than 16 hours. The meltblown nonwoven fabric obtained had a 1-butanal content of 5.5 mass ppm and was evaluated as "A" by the odor test. The evaluation results are shown in Table 1.

### [Production of a laminate]

The meltblown nonwoven fabric obtained was used as an adhesion layer to form a layer structure of "surface material 1/PVB nonwoven fabric/glass fiber/PVB nonwoven fabric/foam/PVB nonwoven fabric/glass fiber/PVB nonwoven fabric/surface material 2". Here, the foam layer was made of a polyether rigid urethane foam with a basis weight of 180 g/m² and a thickness of 6 mm (from INOAC Corporation), and the glass fiber layer (from Japan Vilene Company) had a basis weight of 100 g/m² and a thickness of 20 mm. The surface material 1 layer was made of a polyester fiber nonwoven fabric with a basis weight of 25 g/m² (from Maeda Kosen Co., Ltd.), and the surface material 2 layer was made of a polyester fiber nonwoven fabric with a basis weight of 220 g/m² (from Maeda Kosen Co., Ltd.). These layers were piled and pressed under the press conditions: a press temperature of 130 °C, a press time of 30 sec and a pressure of 0.3 kg/cm², to afford a laminate. The laminate obtained had a basis weight of 810.6 g/m² and a thickness of 9.52 mm. A peeling strength between the urethane foam layer and the glass fiber layer was 0.82 N/15 mm. The evaluation results are shown in Table 1.

### Example 2

Using a PVB pellet as described in Example 1, a meltblown nonwoven fabric with a basis weight of 24.5 g/m² and a thickness of 0.221 mm was produced at the same spinning temperature as Example 1. The nonwoven fabric obtained was used as described in Example 1, to produce a laminate, which was evaluated. The results are shown in Table 1.

### Comparative Example 1

A PVB pellet was produced as described in Example 1, except that in producing a PVB pellet, a pressure in the vent units was changed to, from the hopper side, 0.02 MPa and 0.01 MPa, respectively. Using a PVB pellet obtained, a meltblown nonwoven fabric with a basis weight of 24.2 g/m² and a thickness of 0.233 mm was produced at the same spinning temperature as Example 1. The nonwoven fabric obtained was used as described in Example 1, to produce a laminate, which was evaluated. The results are shown in Table 1.

### Comparative Example 2

Using a PVB pellet as described in Example 1, a meltblown nonwoven fabric with a basis weight of 25.8 g/m² and a thickness of 0.250 mm was produced at a spinning temperature of 240 °C. The nonwoven fabric obtained was used as described in Example 1, to produce a laminate, which was evaluated. The results are shown in Table 1.

### Comparative Example 3

Using a copolymerized polypropylene, a meltblown nonwoven fabric with a basis weight of 25.2 g/m² and a thickness of 0.253 mm was produced at a spinning temperature of 285 °C. The nonwoven fabric obtained was used as an adhesion layer as described in Example 1, to produce a laminate. The results are shown in Table 1.

### Example 3

Using a PVB pellet as obtained in Example 1, a spunbonded nonwoven fabric was produced. Using a spinning nozzle having 1000 nozzle pores with a diameter of 0.4 mm per 1 m width, a resin was extruded at a spinning temperature of 200 °C and a discharge rate per pore of 1.0 g/min, followed by draft drawing. Thus, a spunbonded nonwoven fabric with a fiber diameter of 15 µm, a basis weight of 30.0 g/m² and a thickness of 0.441 mm was obtained. A time from the beginning of spinning to mass generation was more than 16 hours. Using the spunbonded nonwoven fabric obtained as an adhesion layer, the layer structure as described in Example 1 was formed and pressed under the press conditions: a press temperature of 140 °C, a press time of 25 sec and a pressure of 0.2 kg/cm², to obtain a laminate. The results are shown in Table 1.

### Comparative Example 4

A spunbonded nonwoven fabric with a basis weight of 31.2 g/m² and a thickness of 0.451 mm was produced as described in Example 3, except that the PVB pellet obtained in Comparative Example 1 was used and a spinning temperature was changed to 240 °C. Using the spunbonded nonwoven fabric obtained as an adhesion layer, a laminate was produced as described in Example 3. The results are shown in Table 1.

### Comparative Example 5

Using a webby spunbonded nonwoven fabric made of modified polyester fibers with a basis weight of 30.0 g/m² and a thickness of 0.230 mm ("Dynac G0030" from TOYOBO Co., Ltd.) as an adhesion layer, a laminate was produced as described in Example 3. The results are shown in Table 1.

**[Table 1]**

| | | Example 1 | Example 2 | Comparative Example 1 | Comparative Example 2 | Comparative Example 3 | Example 3 | Comparative Example 4 | Comparative Example 5 |
|---|---|---|---|---|---|---|---|---|---|
| Pellet | Melt-kneading temperature [°C] | 200 | 200 | 200 | 200 | - | 200 | 200 | - |
| | Extruder vent pressure 1 [MPa] | 0.005 | 0.005 | 0.02 | 0.005 | - | 0.005 | 0.02 | - |
| | Extruder vent pressure 2 [MPa] | 0.003 | 0,003 | 0.01 | 0 003 | - | 0.003 | 0.01 | - |
| | Acid value [mgKOH/g] | 0.09 | 0.09 | 0.31 | 0.09 | - | 0.09 | 0.31 | - |
| | Butanal content [mass ppm] | 3.5 | 3.5 | 15 | 3.5 | | 3.5 | 15 | - |
| Nonwoven fabric | Type of nonwoven fabric *1) | MB | MB | MB | MB | MB | SB | SB | SB |
| | Resin composition | PVB | PVB | PVB | PVB | PP | PVB | PVB | modified PES |
| | Spinning temperature [°C] | 205 | 205 | 205 | 240 | 285 | 200 | 240 | - |
| | Mass generation time [hour] | >16 | >16 | 6 | 5 | - | >16 | 2 | - |
| | Basis weight [g/m²] | 46.4 | 24.5 | 24.2 | 25.8 | 25.2 | 30.0 | 31.2 | 30.0 |
| | Thickness [mm] | 0.296 | 0.221 | 0.233 | 0.250 | 0.253 | 0.441 | 0.451 | 0.230 |
| | Butanal content [mass ppm] | 5.5 | 5.7 | 29 | 23 | 0 | 5.5 | 28 | 0 |
| | Odor | A | A | C | C | A | A | C | A |
| Laminate | Basis weight [g/m²] | 810.6 | 723.0 | 722.2 | 725.8 | 725.8 | 745.0 | 749.8 | 745.0 |
| | Thickness [mm] | 9.52 | 9.21 | 9.18 | 9.56 | 9.38 | 10.71 | 11.21 | 10.21 |
| | Adhesion strength [N/15mm] | 0.82 | 0.75 | 0.72 | 0.73 | 0.37 | 0.59 | 0.61 | 0.29 |

| | | | | | | | | | |
|---|---|---|---|---|---|---|---|---|---|
| *1) MB: meltblown nonwoven fabric SB:spunbonded nonwoven fabric | | | | | | | | | |

As shown in Table 1, a 1-butanal content was reduced and odor was significantly reduced in PVB nonwoven fabrics of Examples 1 to 3 produced at a spinning temperature of 220 °C or lower using a PVB pellet with an acid value of 0.12 mgKOH/g or less and a 1-butanal content of 5 mass ppm or less. All laminates obtained using the nonwoven fabric as an adhesion layer exhibited excellent interlayer adhesiveness. On the other hand, for Comparative Examples 1 and 4 using a PVB pellet with an acid value of more than 0.12 mgKOH/g and a 1-butanal content of more than 5 mass ppm and Comparative Examples 2 and 4 in which spinning was conducted at a temperature of higher than 220 °C, each of the PVB nonwoven fabric obtained had a higher 1-butanal content and had odor. Furthermore, for the laminate of Comparative Example 3 using a polypropylene nonwoven fabric and the laminate of Comparative Example 5 using a modified polyester, interlayer adhesiveness was insufficient.

## Claims

1. A method for manufacturing meltblown or spunbonded nonwoven fabric made of continuous fibers of polyvinyl butyral having a butyralization degree of 50 to 90 mass%, wherein a content of 1-butanal in the fabric is 10 mass ppm or less, the method comprising
charging a polyvinyl butyral powder with a moisture content of 5 mass% or less in an extruder; forming polyvinyl butyral pellets having a butyralization degree of 50 to 90 mass%, an MFR of 0.5 to 45 g/10 min at 150 °C and 2.16 kgf, an acid value of 0.12 mgKOH/g or less, and a 1-butanal content of 5 mass ppm or less, by melt-kneading the powder at a temperature of 220 °C or lower while devolatilizing at a reduced pressure of 0.005 MPa or less by means of at least one vent,
melt-spinning the pellets to produce continuous fibers at a temperature of 220 °C or lower, and
forming a web by integrating the continuous fibers.

2. A meltblown or spunbonded nonwoven fabric made of continuous fibers of polyvinyl butyral having a butyralization degree of 50 to 90 mass%, wherein a content of 1-butanal in the fabric is 10 mass ppm or less, obtainable by the method of claim

3. A laminate wherein an inorganic fiber layer is adhered to another layer via an adhesion layer made of the nonwoven fabric as claimed in claim 2.

## Patentansprüche

1. Ein Verfahren zur Herstellung eines schmelzgeblasenen oder spinngebundenen Vliesstoffs hergestellt aus Polyvinylbutyralendlosfasern mit einem Butyralisierungsgrad von 50 bis 90 Massen-%, wobei ein Gehalt an 1-Butanal in dem Stoff 10 Massen-ppm oder weniger beträgt, wobei das Verfahren umfasst
Einfüllen eines Polyvinylbutyralpulvers mit einem Feuchtigkeitsgehalt von 5 Massen-% oder weniger in einen Extruder; Bilden von Polyvinylbutyralpellets mit einem Butyralisierungsgrad von 50 bis 90 Massen-%, einer MFR von 0,5 bis 45 g/10 min bei 150°C und 2,16 kgf, einer Säurezahl von 0,12 mgKOH/g oder weniger und einem 1-Butanalgehalt von 5 Massen-ppm oder weniger, durch Schmelzkneten des Pulvers bei einer Temperatur von 220°C oder weniger unter Entgasung bei einem reduzierten Druck von 0,005 MPa oder weniger unter Verwendung von mindestens einer Entlüftung, Schmelzspinnen der Pellets zum Herstellen von Endlosfasern bei einer Temperatur von 220°C oder weniger, und
Bilden einer Bahn durch Einbinden der Endlosfasern.

2. Ein schmelzgeblasener oder spinngebundener Vliesstoff, hergestellt aus Polyvinylbutyralendlosfasern mit einem Butyralisierungsgrad von 50 bis 90 Massen-%, wobei ein Gehalt an 1-Butanal in dem Stoff 10 Massen-ppm oder weniger beträgt, erhältlich nach dem Verfahren von Anspruch 1.

3. Ein Laminat, wobei eine anorganische Faserschicht an eine andere Schicht über eine Haftschicht hergestellt aus dem Vliesstoff nach Anspruch 2 gehaftet ist.

## Revendications

1. Méthode pour fabriquer un tissu non tissé soufflé à l'état fondu ou filé lié, fait de fibres continues de poly(butyral de vinyle) ayant un degré de butyralisation de 50 à 90 % en masse, dans laquelle la teneur en 1-butanal dans le tissu est de 10 ppm en masse ou moins, la méthode comprenant
le chargement d'une poudre de poly(butyral de vinyle) ayant une teneur en humidité de 5 % en masse ou moins dans une extrudeuse ; la formation de pastilles de poly(butyral de vinyle) ayant un degré de butyralisation de 50 à 90 % en masse, un MFR de 0,5 à 45 g/10 min à 150°C et sous 2,16 kgf, un indice d'acide de 0,12 mg KOH/g ou moins, et une teneur en 1-butanal de 5 ppm en masse ou moins, par malaxage à l'état fondu de la poudre à une température de 220°C ou moins pendant une dévolatilisation sous une pression réduite de 0,005 MPa ou moins, au moyen d'au moins une aération,
le filage à l'état fondu des pastilles pour produire des fibres continues à une température de 220°C ou moins, et
la formation d'une toile par intégration des fibres continues.

2. Tissu non tissé soufflé à l'état fondu ou filé lié fait de fibres continues de poly(butyral de vinyle) ayant un degré de butyralisation de 50 à 90 % en masse, dans laquelle la teneur en 1-butanal dans le tissu est de 10 ppm en masse ou moins, pouvant être obtenue par la méthode selon la revendication 1.

3. Stratifié dans lequel une couche de fibres inorganiques adhère à une autre couche via une couche d'adhésion faite du tissu non tissé tel que défini dans la revendication 2.
